# EUROPEAN PATENT SPECIFICATION

(11) **EP 1 852 170 B1**
(45) Date of publication and mention of the grant of the patent: **30.12.2009**
(21) Application number: 07008631.9
(22) Date of filing: 27.04.2007
(51) Int. Cl.: B01D 27/07, F02M 37/22, B01D 27/14

(54) **Gas oil filter for diesel engines**
Dieselkraftstoff-Filter für Dieselmotoren
Filtre à gazole pour moteurs diesels

(30) Priority: 03.05.2006 IT TO20060323
(43) Date of publication of application: 07.11.2007
(73) Proprietor: Delgrosso S.p.A., 10042 Nichelino TO (IT)
(72) Inventor: Delgrosso, Umberto, 10024 Moncalieri TO (IT)
(74) Representative: Cian, Paolo

(56) References cited:
- EP-A- 1 267 068
- EP-A- 1 801 408
- WO-A-01/34273
- WO-A-01/72396

## Description

The present invention refers in general to gas oil filters for Diesel engines.

In the modern Diesel engines, the presence of impurities, in particular water drops, in the gas oil may prove to be critical for operation of the fuel injectors. Therefore, filters provided with separation means for separating water from gas oil, have been developed.

More in particular, the invention refers to a filter provided with a separation element for separating water from gas oil.

A known filter of this type is described in EP-1 229 984. In this filter, the filtering element adapted to separate water from gas oil is supported at the basis of a conical appendage which can be applied to the lower end of a sleeve arranged coaxially inside the filter envelope, in such a way that the filtering element extends in a water collection chamber adjacent to the bottom of the envelope. The conical appendage associated with the sleeve constitutes an additional element involving unavoidably an increase of the production costs of the filter, and constitutes a hindrance in the water collection chamber, which may limit the effectiveness of the filter.

More specifically, the invention refers to a filter having the features mentioned in the preamble of claim 1.

A filter of the type defined above is known from EP-1 267 068 which discloses a filtering element for separating water having the shape of a small basket, housed inside the sleeve. However, the complex shape of this filtering element is not favourable for its manufacturing with limited costs. Moreover, the sidewall of the small basket element, which has a conical shape with a circular base, is provided with portions not much spaced from the sleeve wall, which may hinder the correct downflow of the water drops separated from gas oil to the collection chamber.

The main object of the invention is to provide a gas oil filter which allows to improve the water separation effect with respect to previously known solutions, and which is at the same time simple, which can be manufactured with limited costs and is effective in operation.

According to the invention, this object is reached by a filter having the features set forth in claim 1.

By virtue of these features, the filter of the invention is provided with a simple structure to full advantage of the reduction of the production cost and of the increase of the operative reliability. Moreover, the filtering element for water separation is provided with a structure facilitating the downflow of water droplets separated from gas oil, to the collection chamber.

Further characteristics and advantages of the invention will turn out to be more clear by reading the following detailed description, which has been provided purely as a non-limitative example and refers to the appended drawings, in which:
- figure 1 is a sectional side elevational view of a first modification of a gas oil filter according to the invention;
- figure 2 is a perspective view of a detail indicated by arrow II in figure 1;
- figures 3 and 4 are views similar to figures 1 and 2, which show another modification of the invention; and
- figures 5 to 7 are schematic views similar to figures 2 and 4, respectively showing further modifications of the invention.

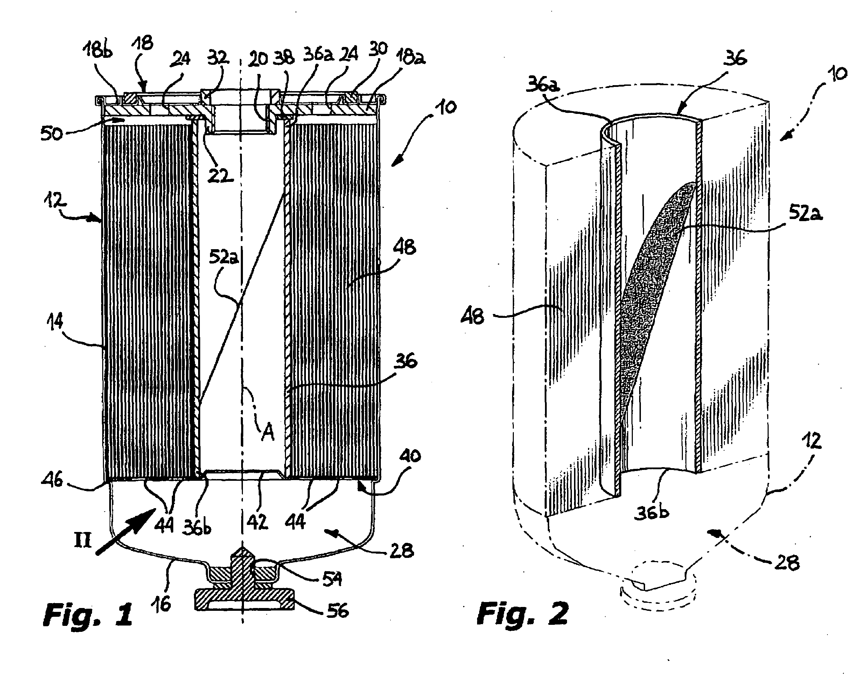

With initial reference to figures 1 and 2, a gas oil filter, particularly for Diesel engines, is indicated in general by numeral reference 10.

In the following description, the terms "upper" and "lower" refer to the normal assembly condition of the filter 10 in the engine of a motor vehicle.

The filter 10 comprises a cylindrical envelope 12 having a general axis A, a sidewall 14 thereof being closed at the bottom by a bottom 16 and at the top by a circular cover 18.

The cover 18 comprises a disc-shaped member 18a having a central hole 20 coaxial to the axis A and encircled by a threaded collar 22 which projects towards the inside of the envelope 12, and a series of axial holes 24 arranged along a circumference concentric with the hole 20. The disc-shaped member 18a is fixed at the top of the sidewall 14 by means of a circular plate 18b, for example by seaming the peripheral edge thereof on the upper edge of the wall 14.

The holes 24 constitute openings for the inlet of gas oil inside the envelope 12, while the hole 20 is provided for being connected with a union (not shown) for the outlet of gas oil from the filter 10. Conveniently, annular gaskets 30 and 32 are arranged on the plate 18b in order to exert a seal for gas oil entering and outflowing with respect to the filter 10.

A tubular sleeve 36, typically of plastic material, is arranged inside the envelope 12, which extends coaxially to the axis A along a substantial portion of the axial length of the envelope 12, so as to leave at the bottom a free zone 28 which defines a water collection chamber adjacent to the bottom 16, whose function will be made more clear in the following of the description.

In particular, the sleeve 36 has an upper end 36a resting on the disc member 18a with the interposition of an annular gasket 38 encircling the collar 22, and a lower end 36b resting on a drilled plate 40 provided with a central hole 42 and with a series of holes 44 radially spaced with respect to the axis A. The outer edge of the plate 40 rests on a radial shoulder 46 of the wall 14.

A first filtering element 48, typically consisting of a paper cartridge, which covers the radial space defined between the sleeve 36 and the wall 14 and is separated from the disc member 18a by an annular inlet chamber 50, is also supported on the drilled plate 40. The function of the filtering element 48 is notoriously to separate possible solid impurities from the gas oil admitted inside the filter 10.

The sleeve 36, which is intended to connect the hole 20 with the collection chamber 28, is provided with a second filtering element of the separation membrane type, made by a micronet indicated in figures 1 and 2 by reference numeral 52a, having a sheet shape which can be substantially developped in a plane.

The micronet 52a is entirely arranged inside the sleeve 36 and its peripheral edge is integrally fixed to the wall of the sleeve 36. It is conveniently made by a plastic material, the size of the meshes thereof being such as to allow that only gas oil can cross them, but not the water droplets dispersed in it. The micronet 52a is preferably fixed by incorporating a portion of its peripheral edge in the wall of the sleeve 36 by means of comoulding.

The micronet 52a is substantially flat, has an elliptical shape, and extends in a plane inclined with respect to the axis A. It may form an angle of about 20° with the axis A, in order to have a relatively wide active surface.

A central weep hole 54 is formed in the bottom 16 of the envelope 12, which is usually engaged by a removable stopper 56 to which a sensor adapted to sense the water level in the chamber 28 can be associated in a per-se known manner.

In operation of the filter 10, the gas oil is admitted into the envelope 12 through the holes 24 of the cover 18, until it enters the annular inlet chamber 50 and crosses axially the filtering element 38 in order to reach the collection chamber 28. Then, the gas oil admitted in the chamber 28 goes up towards the hole 20 of the cover 18 along the channel defined by the sleeve 36, so as to intercept the micronet 52a in such a way that water drops dispersed in it are separated, so as to remain confined on the side of the micronet 52a facing the chamber 28. The water drops separated in this way, go down along the micronet 52a and the inner surface of the sleeve 36 until they fall, owing to the gravity, in the chamber 28. Only gas oil filtered by the micronet 52a comes out from the filter 10 through the drain hole 20 and the union connected to it.

The water collected in the collection chamber 28 can be discharged through the hole 54 by removing the stopper 56. When a sensor for sensing the water level in the chamber 28 is provided for, the stopper 56 can be automatically driven for releasing the hole 54 as a result of the sensing of the attainment of a water threshold level in the collection chamber 28.

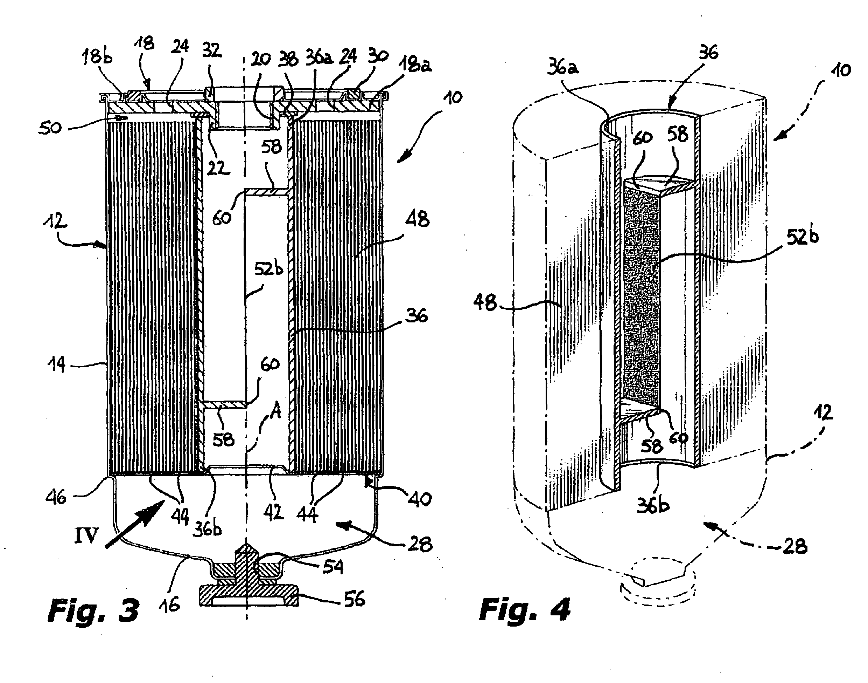

Figures 3 and 4, in which the same numeral references of the previous modification have been used to indicate parts equal or similar to it, show another modification of the filter according to the invention. In the description of such figures, only the elements different from those of the previous modification will be taken into consideration, while all that will not be explicitly described, already corresponds to what has been previously described.

In these figures, the sleeve 36 has a pair of opposed cantilever appendages 58 of a semicircular shape, which extend perpendicular to the axis A at different heights with respect to the axial extension of the sleeve 36. The micronet associated to the sleeve 36 is indicated in these figures by reference numeral 52b and has a flat shape. It lies in a plane parallel to the axis A, so that it has a rectangular shape with two opposite sides fixed to the free ends 60 of the cantilever appendages 58, while the others two sides thereof are fixed integrally to the wall of the sleeve 36.

Of course, should the micronet 52b have an inclination such as to form an angle different from zero with the axis A, and therefore an inclination which is intermediate between those of the modifications shown in figures 1, 2 and 3, 4, respectively, it should have a substantially quadrilateral shape, with a pair of straight sides fixed to the cantilever appendages 58, which in this case will have the shape of a circle segment, and a pair of opposite arched sides integrally fixed to the wall of the sleeve 36.

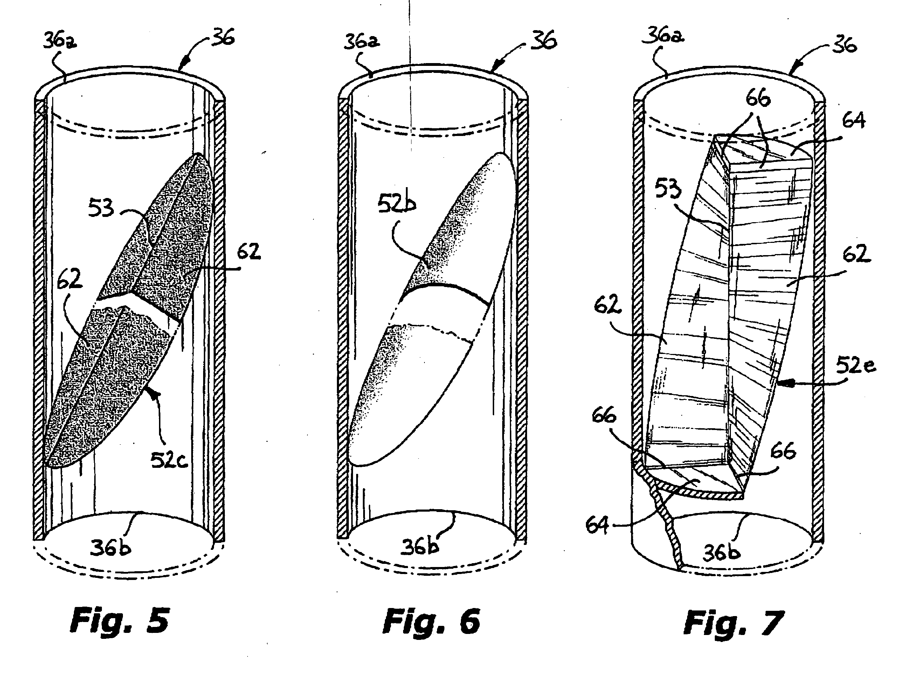

Figures 5 to 7 show further modifications of the filter of the invention, in which the same numeral references of the previous modifications have been used to indicate parts equal or similar to that described above.

In particular, the micronet of figure 5, indicated by reference 52c, is arranged inclined with respect to the axis A of the sleeve 36 and still has a substantially elliptical shape. The surface therof is of a polyhedral type and can be derived from a flat sheet as a result of an intermediate fold, and comprises two flat semi-elliptical portions 62 having in common an edge 53 which forms an angle with axis A.

The micronet of figure 6, indicated by reference 52d, has also a substantially elliptical shape and extends on a cylindrical surface inclined with respect to the axis A, so that it can be easily obtained by bending a flat micronet in the shape of a sheet.

Conveniently, both the micronets 52c and 52d have their entire peripheral edge incorporated in the wall of the sleeve 36, for example as a result of a comoulding manufacturing process, in a manner analogous to that described above with reference to the micronet 52a.

The micronet of figure 7, indicated by reference 52e, extends on a polyhedral surface between a pair of radial cantilever appendages 64 which have the shape of a gore or of a circle sector, similar to the cantilever appendages 58 described above with reference to the micronet 52b. Each appendage 64 has a pair of diverging end surfaces 66 defining a vertex. An edge 53 of the micronet 52b extends between the two vertexes of the appendages 64, which may coincide with the axis A of the sleeve 36. The edge 53 is common to two substantially flat and rectangular portions 62 of the micronet 52b, each of which has two opposed sides fixed at the top and at the bottom at a respective end 66 of one of the appendages 64, and a generally arch-shaped side opposite to the edge 53, which is fixed to the wall of the sleeve 36. Also the micronet 52b can be obtained from a substantially flat sheet as a result of forming an intermediate bend.

In the filter 10 of the present invention, the unit consisting of the sleeve 36 and the respective micronet, provides the following advantages:
the water drop separation surface is far from the collection chamber 28, which allows to obtain a slower and less turbulent gas oil flow in proximity of the water separation zone. This allows the water drops in suspension in the gas oil to have greater dimensions, and therefore they can be more easily separated from gas oil. Moreover, the distance between the internal surface of the sleeve and the micronet surface, in particular the surface at which the separation of the water drops occurs, is relatively wide, so that water bunching may be avoided and the downflow of water to the bottom turns out to be facilitated. In short, the solution at the basis of the present invention allows a greater efficiency of water separation to be obtained with respect to the solutions previously known.

## Claims

1. Gas oil filter for Diesel engines, comprising:
- a cylindrical envelope (12) having a bottom (16) and a cover (18) provided with openings (24, 20) for admitting gas oil inside the envelope (12) and for discharging gas oil outside of the envelope (12),
- a sleeve (36) arranged in the envelope (12) with its general axis (A) substantially parallel to that of the envelope, and having the opposite ends (36a, 36b) respectively facing the cover (18) and a collection chamber (28) adjacent to the bottom (16) of the envelope (12),
- a first filtering element (48) interposed radially between the sleeve (36) and the envelope (12), which is separated from the bottom (16) by said collection chamber (28), and
- a second filtering element for separating water particles from gas oil, including a micronet (52a; 52b; 52c; 52d; 52e) arranged inside the sleeve (36),
**characterized in that** said micronet (52a; 52b; 52c; 52d; 52e) has the shape of a sheet whose surface can be substantially developped in a plane, and is fixed integrally to the sleeve (36) along its periphery.

2. Filter according to claim 1, **characterized in that** the micronet (52a; 52c; 52d) is substantially elliptical and is arranged inclined with respect to the axis (A) of the sleeve (36).

3. Filter according to claim 2, **characterized in that** the micronet (52a) is flat.

4. Filter according to claim 1, **characterized in that** the micronet (52c) extends on a polyhedral surface having at least an edge (53) separating at least two flat portions (62) thereof.

5. Filter according to claim 1, **characterized in that** the micronet (52d) extends on a cylindrical surface.

6. Filter according to any one of claims 3 to 5,
**characterized in that** the entire peripheral edge of the micronet (52a; 52c; 52d) is incorporated in the wall of the sleeve (36).

7. Filter according to claim 1, **characterized in that** the sleeve (36) comprises a pair of radial cantilever appendages (58; 64) extending inside it at different heights of its axial extension, and **in that** the micronet (52b; 52e) is connected with end portions (60; 66) of said appendages (58; 64).

8. Filter according to claim 7, **characterized in that** said appendages (58) are opposed, and **in that** the micronet (52b) has a substantially quadrilateral shape and lies in a plane which extends between said appendages (58) of the sleeve (36).

9. Filter according to claim 8, **characterized in that** the micronet (52b) is rectangular and lies in a plane parallel to the axis (A) of the sleeve (36).

10. Filter according to claim 7, **characterized in that** the micronet (52e) extends on a polyhedral surface having at least an edge (53) separating at least two rectangular flat portions (62) thereof, each of which has two opposed sides fixed to said appendages (64) of the sleeve (36).

11. Filter according to claim 10, **characterized in that** said at least an edge (53) of the micronet (52e) is parallel to the axis (A) of the sleeve (36).

12. Filter according to any one of claims 1 to 11, **characterized in that** the micronet (52a; 52b; 52c; 52d; 52e) is incorporated in the sleeve (36) by means of comoulding.

13. Filter according to any one of claims 1 to 12, **characterized in that** the micronet (52a; 52b; 52c; 52d; 52e) is made of plastic material.

## Patentansprüche

1. Kraftstofffilter für Dieselmotoren, umfassend:
- einen zylindrischen Behälter (12) mit einem Boden (16) und einem Deckel (18), der Öffnungen (24, 20) für den Eintritt des Kraftstoffs in den Behälter (12) bzw. für den Auslass des Kraftstoffs aus dem Behälter (12) aufweist,
- eine Hülse (36), die in dem Behälter (12) mit ihrer Hauptachse (A) parallel zu derjenigen des Behälters (12) angeordnet ist und deren einander gegenüberliegende Enden (36a, 36b) dem Deckel (18) bzw. einem an den Boden (16) des Behälters (12) anschließenden Sammelraum (28) zugewandt sind,
- ein erstes Filterelement (48), das radial zwischen die Hülse (36) und den Mantel des Behälters (12) eingesetzt und von dem Boden (16) durch den Sammelraum (28) getrennt ist,
- ein zweites Filterelement zur Abscheidung von Wasserpartikeln aus dem Kraftstoff, welches ein Mikronetz (52a; 52b; 52c; 52d; 52e) umfasst, das in der Hülse (36) angeordnet ist,
**dadurch gekennzeichnet, dass** das Mikronetz (52a; 52b; 52c; 52d; 52e) die Form eines Blattes hat, dessen Oberfläche sich im wesentlichen in einer Ebene erstreckt und das entlang seines Außenumfangs fest mit der Hülse (36) verbunden ist.

2. Filter nach Anspruch 1, **dadurch gekennzeichnet, dass** das Mikronetz (52a; 52c; 52d) im wesentlichen elliptisch ausgebildet und schräg zur Achse (A) der Hülse (36) angeordnet ist.

3. Filter nach Anspruch 2, **dadurch gekennzeichnet, dass** das Mikronetz (52a) flach ist.

4. Filter nach Anspruch 1, **dadurch gekennzeichnet, dass** sich das Mikronetz (52c) auf einer Polyederfläche erstreckt, die wenigstens eine Kante (53) hat, welche wenigstens zwei ebene Zonen (62) der Polyederfläche voneinander trennt.

5. Filter nach Anspruch 1, **dadurch gekennzeichnet, dass** sich das Mikronetz (52d) auf einer Zylinderfläche erstreckt.

6. Filter nach einem der Ansprüche 3 bis 5, **dadurch gekennzeichnet, dass** der gesamte Außenrand des Mikronetzes (52a; 52c; 52d) in der Wand der Hülse (36) eingebettet ist.

7. Filter nach Anspruch 1, **dadurch gekennzeichnet, dass** die Hülse (36) ein Paar radialer Konsolvorsprünge (58; 64) hat, die sich in der Hülse auf unterschiedlichen Höhen ihrer Axialerstreckung befinden, und dass das Mikronetz (52b; 52e) mit den Endbereichen (60; 66) der Konsolvorsprünge (58; 64) verbunden ist.

8. Filter nach Anspruch 7, **dadurch gekennzeichnet, dass** die Konsolvorsprünge (58) einander gegenüberliegen und dass das Mikronetz (52b) im wesentlichen die Form eines Vierecks hat, das in einer Ebene liegt, die sich zwischen den Konsolvorsprüngen (58) der Hülse (36) erstreckt.

9. Filter nach Anspruch 8, **dadurch gekennzeichnet, dass** das Mikronetz (52b) die Form eines Rechtecks hat und in einer Ebene liegt, die parallel zur Achse (A) der Hülse (36) verläuft.

10. Filter nach Anspruch 7, **dadurch gekennzeichnet, dass** sich das Mikronetz (52e) auf einer Polyederfläche erstreckt, die wenigstens eine Kante (53) hat, die wenigstens zwei ebene Rechteckzonen (62) der Polyederfläche voneinander trennt, wobei jede Zone zwei einander gegenüberliegende Seiten hat, die an den Konsolvorsprüngen (64) der Hülse (36) befestigt sind.

11. Filter nach Anspruch 10, **dadurch gekennzeichnet, dass** wenigstens eine Kante (53) des Mikronetzes (52e) parallel zur Achse (A) der Hülse (36) verläuft.

12. Filter nach einem der Ansprüche 1 bis 11, **dadurch gekennzeichnet, dass** das Mikronetz (52a; 52b; 52c; 52d; 52e) bei der Formgebung der Hülse (36) in diese eingebettet ist.

13. Filter nach einem der Ansprüche 1 bis 12, **dadurch gekennzeichnet, dass** das Mikronetz (52a; 52b; 52c; 52d; 52e) aus Kunststoff besteht.

## Revendications

1. Filtre à gasoil pour moteurs Diesel, comprenant:
- une enveloppe cylindrique (12) comprenant un fond (16) et un couvercle (18) comprenant des ouvertures (24, 20) pour l'admission de gasoil à l'intérieur de l'enveloppe (12) et pour décharger le gasoil en dehors de l'enveloppe (12),
- un manchon (36) agencé dans l'enveloppe (12) ayant son axe principal (A) substantiellement parallèle à celui de l'enveloppe, et ayant des extrémités opposées (36a, 36b) faisant respectivement face au couvercle (18) et à une chambre de collecte (28) proche du fond (16) de l'enveloppe (12),
- un premier élément filtrant (48) interposé radialement entre le manchon (36) et l'enveloppe (12), qui est séparé du fond (16) par ladite chambre de collecte (28), et
- un deuxième élément filtrant permettant de séparer des particules d'eau du gasoil, comprenant un réseau alvéolé microscopique (52a ; 52b ; 52c ; 52d ; 52e) agencé à l'intérieur du manchon (36),
**caractérisé en ce que** ledit réseau alvéolé microscopique (52a ; 52b ; 52c ; 52d ; 52e) est sous la forme d'une feuille dont la surface peut être substantiellement développée dans un plan, et **en ce qu'**il est intégralement fixé au manchon (36) le long de sa périphérie.

2. Filtre selon la revendication 1, **caractérisé en ce que** le réseau alvéolé microscopique (52a ; 52c ; 52d) est essentiellement de forme elliptique et agencé de manière inclinée par rapport à l'axe (A) du manchon (36).

3. Filtre selon la revendication 2, **caractérisé en ce que** le réseau alvéolé microscopique (52a) est plat.

4. Filtre selon la revendication 1, **caractérisé en ce que** le réseau alvéolé microscopique (52c) s'étend sur une surface polyèdre comprenant au moins un bord (53) séparant au moins deux parties planes (62) de celui-ci.

5. Filtre selon la revendication 1, **caractérisé en ce que** le réseau alvéolé microscopique (52d) s'étend sur une surface cylindrique.

6. Filtre selon l'une quelconque des revendications 3 à 5, **caractérisé en ce que** l'intégralité du bord périphérique du réseau alvéolé microscopique (52a ; 52c ; le 52d) est incluse dans la paroi du manchon (36).

7. Filtre selon la revendication 1, **caractérisé en ce que** le manchon (36) comprend une paire d'appendices en porte-à-faux (58 ; 64) agencés de manière radiale, s'étendant à l'intérieur de lui à différentes hauteurs de son extension axiale, et **en ce que** le réseau alvéolé microscopique (52b ; 52e) est relié aux parties d'extrémités (60 ; 66) desdits appendices (58 ; 64).

8. Filtre selon la revendication 7, **caractérisé en ce que** lesdits appendices (58) sont opposés l'un à l'autre, et **en ce que** le réseau alvéolé microscopique (52b) comprend une forme essentiellement quadrilatérale et se situe dans un plan qui s'étend entre lesdits appendices (58) du manchon (36).

9. Filtre selon la revendication 8, **caractérisé en ce que** le réseau alvéolé microscopique (52b) est rectangulaire et s'étend dans un plan parallèle à l'axe (A) du manchon (36).

10. Filtre selon la revendication 7, **caractérisé en ce que** le réseau alvéolé microscopique (52e) s'étend sur une surface polyèdre ayant au moins un bord (53) séparant au moins deux parties plates rectangulaires (62) de celui-ci, chacune d'elles comprenant deux côtés opposés fixés auxdits appendices (64) du manchon (36).

11. Filtre selon la revendication 10, **caractérisé en ce que** ledit au moins un bord (53) du réseau alvéolé microscopique (52e) est parallèle à l'axe (A) du manchon (36).

12. Filtre selon l'une quelconque des revendications 1 à 11, **caractérisé en ce que** le réseau alvéolé microscopique (52a ; 52b ; 52c ; 52d ; 52e) est inclus dans le manchon (36) au moyen de comoulage.

13. Filtre selon l'une quelconque des revendications 1 à 12, **caractérisé en ce que** le réseau alvéolé microscopique (52a ; 52b ; 52c ; 52d ; 52e) est fait de matière plastique.
